(19) Europäisches Patentamt
European Patent Office
Office européen des brevets

(11) **EP 1 982 761 A1**

(12) **EUROPEAN PATENT APPLICATION**

(43) Date of publication:
**22.10.2008 Bulletin 2008/43**

(21) Application number: **06255968.7**

(22) Date of filing: **22.11.2006**

(51) Int Cl.:
*B01J 21/00* (2006.01)       *B01J 23/16* (2006.01)
*B01J 23/20* (2006.01)       *B01J 23/22* (2006.01)
*B01J 23/30* (2006.01)       *B01J 27/14* (2006.01)
*B01J 27/188* (2006.01)     *B01J 27/24* (2006.01)
*B01J 37/06* (2006.01)       *B01J 37/08* (2006.01)
*B01J 37/16* (2006.01)       *C07C 1/00* (2006.01)
*C07C 1/02* (2006.01)        *C07C 1/24* (2006.01)
*C07C 11/02* (2006.01)      *C07C 11/04* (2006.01)
*C07C 11/06* (2006.01)

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK RS**

(71) Applicant: **BP Chemicals Limited
Sunbury-on-Thames, Middlesex TW16 7BP (GB)**

(72) Inventor: **The designation of the inventor has not
yet been filed**

(74) Representative: **De Kezel, Eric
BP International Limited
Patents & Agreements
Chertsey Road
Sunbury-on-Thames
TW16 7LN (GB)**

(54) **Supported heteropolyacid catalysts**

(57)    The present invention relates to a supported heteropolyacid catalyst and/or its salts and to the production process of the said supported heteropolyacid catalyst and/or its salts.

EP 1 982 761 A1

**Description**

The present invention relates to a supported heteropolyacid catalyst and/or its salts and to the production process of the said supported heteropolyacid catalyst and/or its salts.

In particular the present invention provides a supported heteropolyacid catalyst and/or its salts, with specific properties, that allow the supported catalyst to have improved qualities when used in processes, such as, the dehydration of oxygenates to olefins.

Heteropolyacids are valuable chemical compounds which can be used as acid and/or oxygenate catalysts. The processes cited hereinafter, relate to a variety of examples of various heteropolyacids and/or the method(s) for producing them;

US2006052240 describes a supported catalyst comprising a support having supported thereon at least one member selected from the group consisting of heteropolyacids and heteropolyacid salts, in which the heteropolyacid and/or heteropolyacid salt is substantially present in a surface layer region of the support to a depth of 30% from the support surface.

US6624325 describes a catalyst for producing lower fatty acid esters through esterification of a lower aliphatic carboxylic acid with a lower olefin, comprising a heteropoly acid or a, salt thereof held on a carrier, and having a specific surface area of the catalyst, as measured by a BET method, of 65 m<2>/g-350 m<2>/g. A process for producing the catalyst and a process for producing a lower fatty acid ester by using the catalyst are also provided.

US5227141 describes a membrane catalytic reactor which comprises a heteropolyacid selected from the group consisting of 12-tungstophosphoric acid, 12-molybdophosphoric acid, 12-molybdotungstophosphoric acid, and 12-tungstosilicic acid, and polysulfone membrane is provided. This membrane catalytic reactor is applicable to vapor-phase dehydration, dehydrogenation, oxidation, and simultaneous separation of organic or inorganic materials, particularly vapor-phase dehydration of ethanol.

US2004/024918 describes a catalyst for use in producing a lower aliphatic carboxylic acid ester, wherein the catalyst is produced by a process comprising a step of contacting the catalyst with a gas containing at least one member selected from water, lower aliphatic carboxylic acids and lower aliphatic alcohols; a process for producing the catalyst; and a process for producing a lower aliphatic carboxylic acid ester using the catalyst. The document further describes a siliceous support for use in a catalyst, which has a silicon content of from 39.7 to 46.3% by mass or a silicon content of from 85 to 99% by mass in terms of silicon dioxide or a crush strength of 30 N or more. By the use of a catalyst comprising the support, a lower aliphatic carboxylic acid ester is produced from lower olefin and a lower aliphatic carboxylic acid in a gas phase without causing great reduction of catalytic activity or cracking or abrasion of the catalyst.

The conversion of oxygenates to alkenes has traditionally been produced by steam or catalytic cracking of hydrocarbons. However, inevitably as oil resources are decreasing, the price of oil is increasing; making light olefin(s) production an increasingly costly process. Thus there is an ever-growing need for non-petroleum routes to produce $C_2$ and $C_2$+ alkene(s), particularly ethene and propene, as these make useful starting materials for a number chemical processes, including the production of polymeric compounds, such as, polyethylene and polypropylene.

However, a major disadvantage associated with the typical dehydration methods used for producing alkene(s) from oxygenates, is that aromatic and alkane by-products are usually co-produced together with the targeted alkene products, and prove both difficult and expensive to separate, e.g. to recover ethene from ethane is both complex and expensive. For example, the well known methanol to olefin(s) - MTO- process can be described as the dehydrative coupling of methanol to alkene(s) and is a well known chemistry that can be employed to produce olefin(s) from alcohol (s). Typical catalysts used in the MTO process include; Molecular sieves such as the microporous crystalline zeolite and non-zeolitic catalysts, particularly silicoaluminophosphates (SAPO), and are well known to promote the conversion of oxygenates by methanol to olefin (MTO) chemistry to hydrocarbon mixtures. The following patents describe this process for various types of these catalysts: U.S. Pat. Nos. 3,928,483, 4,025,575, 4,252,479 (Chang et al.); 4,496,786 (Santilli et al.); 4,547,616 (Avidan et al.); 4,677,243 (Kaiser); 4,843,183 (Inui); 4,499,314 (Seddon et al.); 4,447,669 (Harmon et al.); 5,095,163 (Barger); 5,191,141 (Barger); 5,126,308 (Barger); 4,973,792 (Lewis); and 4,861,938 (Lewis)

However the main problem with the said MTO process being that a range of alkene(s) are being co-produced together with a range of aromatic and alkane by-products, which in turn makes it very difficult and expensive to recover the target alkene(s).

This and other disadvantages of the prior art show that there is a clear need, within the field, for a method of improving the current processes in the dehydration field for the production of $C_2$ and $C_2$+ alkene(s) from oxygenates.

Hence, the present invention specifically relates to a supported heteropolyacid catalyst and/or its salts, which has specific properties that allow it to have improved qualities when used in processes, such as, the dehydration of oxygenates to olefins. Further to this, the present invention also relates to the preparation of the said supported heteropolyacid catalyst and/or it's salts.

Thus, the present invention provides a supported heteropolyacid catalyst, wherein the supported heteropolyacid catalyst, is characterised in that the pore volume of the supported heteropolyacid catalyst suffices the following formula:

## PV > 0.6 – 0.3 [HPA loading / Surface Area of Catalyst]

and the heteropolyacid loading, per surface area of the supported heteropolyacid catalyst is preferably more than 0.1 (micro moles/m2).

Where for the purposes of the present invention and appending claims:

- **PV** is the Pore Volume of the dried supported heteropolyacid catalyst (measured in ml/g catalyst);
- **HPA loading** is the amount of heteropolyacid present in the dried supported heteropolyacid catalyst (measured in micro moles);
- **Surface Area of Catalyst** is the surface area of the dried supported heteropolyacid catalyst (measured in m2).

The term "heteropolyacid", as used herein and throughout the description of the present invention, is deemed to include inter alia; alkali, alkali earth, ammonium, free acids, bulky cation salts, and/or metal salts (where the salts may be either full or partial salts) of heteropolyacids. Hence, the heteropolyacids used in the present invention are complex, high molecular weight anions comprising oxygen-linked polyvalent metal atoms.

Typically, each anion comprises 12-18, oxygen-linked polyvalent metal atoms. The polyvalent metal atoms, known as the peripheral atoms, surround one or more of the central atoms in a symmetrical manner. The peripheral atoms may be one or more of molybdenum, tungsten, vanadium, niobium, tantalum, or any other polyvalent metal. The central atoms are preferably silicon or phosphorus, but may alternatively comprise any one of a large variety of atoms from Groups I-VIII in the Periodic Table of elements. These include copper, beryllium, zinc, cobalt, nickel, boron, aluminium, gallium, iron, cerium, arsenic, antimony, bismuth, chromium, rhodium, silicon, germanium, tin, titanium, zirconium, vanadium, sulphur, tellurium, manganese nickel, platinum, thorium, hafnium, cerium, arsenic, vanadium, antimony ions, tellurium and iodine. Suitable heteropolyacids include Keggin, Wells-Dawson and Anderson-Evans-Perloff heteropolyacids. Specific examples of suitable heteropolyacids are as follows:

| | |
|---|---|
| 18-tungstophosphoric acid | - H6[P$_2$W18O62].xH2O |
| 12-tungstophosphoric acid | - H3[PW12O40].xH20 |
| 12-molybdophosphoric acid | - H3[PMo12O40].xH2O |
| 12-tungstosilicic acid | - H4[SiW12O40].xH2O |
| 12-molybdosilicic acid | - H4[SiMo12O40].xH2O |
| Cesium hydrogen tungstosilicate | - Cs3H[SiW12O40].xH2O |

and the free acid or partial salts of the following heteropolyacids:

| | |
|---|---|
| Monopotassium tungstophosphate | - KH5[P2W18O62].xH2O |
| Monosodium 12-tungstosilicic acid | - NaK3[SiW12O40].xH2O |
| Potassium tungstophosphate | - K6[P2W18O62].xH2O |
| Sodium molybdophosphate | - Na3[PMo12O40].xH2O |
| Ammonium molybdodiphosphate | - (NH4)6[P2Mo18O62].xH2O |
| Potassium molybdodivanado phosphate | - K5[PMoV2O40].xH2O |

In addition mixtures of different heteropolyacids and salts can be employed. The preferred heteropolyacids for use in the process described by the present invention is any one or more heteropolyacid that is based on the Keggin or Wells-Dawson structures; more preferably the chosen heteropolyacid for use in the process described by the present invention is any one or more of the following: silicotungstic acid, phosphotungstic acid, silicomolybdic acid and phosphomolybdic acid; and more preferably the chosen heteropolyacid for use in the process described by the present invention is any one or more silicotungstic acid; and most preferably the chosen heteropolyacid for use in the process described by the present invention is 12-tungstosilicic acid (H$_4$[SiW$_{12}$O$_{40}$].xH$_2$O)

Preferably, the heteropolyacids employed according to the present invention have molecular weights of more than 700 and less than 8500, preferably more than 2800 and less than 6000. Such heteropolyacids also include dimeric complexes.

The supported heteropolyacid catalyst may be conveniently prepared by dissolving the chosen heteropolyacid in a suitable solvent, where suitable solvents include polar solvents such as water, ethers, alcohols, carboxylic acids, ketones and aldehydes and/or mixtures thereof and distilled water and/or ethanol are the most preferred solvents. The resulting acidic solution has a heteropolyacid concentration that is preferably comprised between 10 to 80 wt %, more preferably 20 to 70 wt% and most preferably 30 to 60 wt%. This said solution is then added to the chosen support (or alternatively the support is immersed in the solution). The actual volume of acidic solution added to the support is not restricted, and hence may be enough to achieve incipient wetness or wet impregnation, where wet impregnation (i.e. preparation using an excess acidic solution volume relative to pore volume of support), is the preferred method for the purposes of the present invention.

The resulting supported heteropolyacid may be modified, and various salts of heteropolyacid may then be formed in the aqueous solution either prior to, or during, impregnation of the acidic solution onto the support, by subjecting the supported heteropolyacid to a prolonged contact with a solution of a suitable metallic salt or by addition of phosphoric acid and/or other mineral acids.

When using a soluble metallic salt to modify the support, the salt is taken in the desired concentration, with the heteropolyacid solution. The support is then left to soak in the said acidic solution for a suitable duration (e.g. a few hours), with periodic stirring or shaking, after which time it is filtered, using suitable means, in order to remove any excess acid.

When the salt is insoluble it is preferred to impregnate the catalyst with the heteropolyacid and then to tritrate with the salt precursor. This method can improve the dispersion of the heteropolyacid salt. Other techniques such as vacuum impregnation may also be employed.

The impregnated support may then be washed and dried. This may be achieved using any conventional separation technique, including, for example, decantation and/or filtration. Once recovered, the impregnated support may be dried, preferably by placing the support in an oven at elevated temperature. Alternatively, or additionally, a dessicator may be employed. On a commercial scale this drying stage is often achieved by a purge of hot inert gas such as nitrogen.

The amount of heteropolyacid impregnated onto the resulting support is suitably in the range of 10 wt % to 80 wt % and preferably in between 20 wt % to 50 wt %, based on the total weight of the heteropolyacid and of the support.

The weight of the catalyst on drying and the weight of the support used, may be used to obtain the weight of the acid on the support by deducting the latter from the former, giving the catalyst loading as a 'g heteropolyacid/kg catalyst' term. The catalyst loading in 'g heteropolyacid /litre support' can also be calculated by using the known or measured bulk density, of the support. The preferred catalytic loading of heteropolyacid is 150 to 600g heteropolyacid /kg catalyst

According to a preferred embodiment of the present invention the average heteropolyacid loading per surface area of the dried supported heteropolyacid catalyst is more than 0.1 micro moles/m2.

It should be noted that the polyvalent oxidation states and hydration states of the heteropolyacids stated previously, and as represented in the typical formulae of some specific compounds (shown above), only apply to the fresh acid before it is impregnated onto the support, and especially before it is subjected to the dehydration process conditions of the present invention. The degree of hydration of the heteropolyacid may affect the acidity of the supported catalyst and hence its activity and selectivity. Thus, either or both of these actions of impregnation and dehydration process may change the hydration and oxidation state of the metals in the heteropolyacids, i.e. the actual catalytic species used, under the process conditions given, may not yield the hydration/oxidation states of the metals in the heteropolyacids used to impregnate the support. Naturally therefore it is only to be expected that such hydration and oxidation states may also be different in the spent catalysts after the dehydration process of the present invention.

According to a preferred embodiment of the present invention, the amount of chloride present in/on the said heteropolyacid supported catalyst is less than 40 ppm, preferably less than 25 ppm and most preferably less than 20 ppm.

Suitable catalyst supports may be in a powder form or alternatively may be in a granular form, or in a pelletised form, a spherical form or as a extrudates (including shaped particles) and include, but are not limited to, Mordenites e.g. montmorillonite, clays, bentonite, diatomous earth, titania, activated carbon, alumina, silica-alumina, silica-titania cogels, silica-zirconia cogels, carbon coated alumina, zeolites, zinc oxide, flame pyrolysed oxides. Supports can be mixed oxides, neutral or weakly basic oxides. Silica supports are preferred, such as silica gel supports and supports produced by the flame hydrolysis of SiC14. Preferred supports are substantially free of extraneous metals or elements which might adversely affect the catalytic activity of the system. Thus, suitable silica supports are at least 99% w/w pure. Impurities amount to less than 1% w/w, preferably less than 0.60% w/w and most preferably less than 0.30% w/w. The pore volume of the support is preferably more than 0.50ml/g and preferably more than 0.8 ml/g.

Suitable silica supports include, but are not limited to any of the following: Grace Davison Davicat® Grade 57, Grace Davison Davicat® 1252, Grace Davison Davicat® SI 1254, Fuji Silysia CariAct® Q15, Fuji Silysia CariAct® Q10, Degussa Aerolyst® 3045 and Degussa Aerolyst® 3043. The average diameter of the support particles is 2 to 10 mm, preferably 3 to 6 mm. However, these particles may be crushed and sieved to smaller sizes of, for example, 0.5-2 mm, if desired.

The average pore radius (prior to impregnation with the heteropolyacid) of the support is 10 to 500Å, preferably 30 to 175Å, more preferably 50 to 150 Å and most preferably 60 to 120Å. The BET surface area is preferably between 50 and 600 m2/g and is most preferably between 150 and 400 m2/g. The support has an average single particle crush strength of at least 1 kg force, suitably at least 2 kg force, preferably at least 6 kg force and more preferably at least 7 kg force. The bulk density of the support is at least 380 g/1, preferably at least 395 g/1.

The single particle crush strength was determined by using a Mecmesin force gauge which measures the minimum force necessary to crush a particle between parallel plates. The crush strength is based on the average of that determined for a set of at least 25 catalyst particles.

The BET surface area, pore volume, pore size distribution and average pore radius were determined from the nitrogen adsorption isotherm determined at 77K using a Micromeritics TRISTAR 3000 static volumetric adsorption analyser. The procedure used was an application of British Standard methods BS4359:Part 1:1984 'Recommendations for gas adsorption (BET) methods' and BS7591:Part 2:1992, 'Porosity and pore size distribution of materials' - Method of evaluation by gas adsorption. The resulting data were reduced using the BET method (over the pressure range 0.05-0.20 P/Po) and the Barrett, Joyner & Halenda (BJH) method (for pore diameters of 20-1000 Å) to yield the surface area and pore size distribution respectively.

Suitable references for the above data reduction methods are Brunauer, S, Emmett, P H, & Teller, E, J. Amer. Chem. Soc. 60, 309, (1938) and Barrett, E P, Joyner, LG & Halenda P P, J. Am Chem. Soc. , 1951 73 373-380.

Samples of the supports and catalysts were out gassed for 16 hours @120°C under a vacuum of 5x10-3 Torr prior to analysis.

A further embodiment of the said invention is where the chosen catalyst support is first treated with a fluorinating agent; the applicants believe that by fulfilling this said embodiment the catalyst will become more inert and/or acidic thus improving the selectivity and/or effectiveness of the catalyst during the aforementioned dehydration process.

The applicants believe that the use of the said supported heteropolyacid catalyst and/or its salts, in a process for the production of the target alkene(s) from an oxygenate feedstock, results in an increase in selectivity and productivity to the target alkenes, whilst preventing the formation of alkane by-products and thereby contains numerous advantages. The term 'target alkenes', as used in the description and appending claims, hereinabove and hereinafter, is understood to mean the alkenes that are produced according to the dehydration process of oxygenate feedstock to olefins and preferably consist of either ethene or propene or a mixture thereof. The oxygenate feedstock preferably comprises either of pure alcohol(s), or pure ether(s) or mixtures thereof. Preferably the alcohol(s) present in the said oxygenate feedstock are least one monohydric aliphatic alcohols and have one or more alpha hydrogen(s) present, e.g. ethanol, n-propanol and t-butanol. The preferred monohydric aliphatic alcohol(s) are preferably ethanol and/or propanol, or a mixture thereof, for example, a mixture of ethanol and n-propanol and/or iso-propanol. Ideally the alcohols present in the said oxygenate feedstock comprise a mixture of ethanol and n-propanol in order to be dehydrated into the corresponding target alkene(s).

Examples and comparative examples

Support Materials

- Silica pellets of CariAct® Q6, CariAct® Q10, CariAct® Q15, CariAct® Q30, CariAct® Q50 were obtained from Fuji Silysia
- Silica extrudates of Aerolyst® 3043 and Aerolyst® 3045 were obtained as extrudates from Degussa
- Silica granules of Davicat® Grade 57 and Davicat® 1252 and Davicat® 1254 were obtained from Grace Davison
- Silica pellets Perlkat® 97-0, Perlkat® 39-3, Perlkat® 25-0 were obtained from Engelhard
- Silica aluminate pellets T4640 and T4641 were obtained from Sud Chemie

Support Properties

The support materials were analysed by nitrogen porosimetry.

| Support | Surface Area (m2/g) | Pore Volume (cm3/g) | Mean PSD ( ) |
|---|---|---|---|
| Perlkat 97-0 | 343 | 0.81 | 95 |
| Perlkat 39-3 | 743 | 0.64 | 35 |
| Davicat 1252 | 381 | 1.04 | 109 |
| Davicat 1254 | 559 | 0.83 | 59 |
| Aerolyst 3043 | 174 | 0.98 | 226 |

(continued)

| Support | Surface Area (m2/g) | Pore Volume (cm3/g) | Mean PSD ( ) |
|---|---|---|---|
| Aerolyst 3045 | 156 | 0.93 | 239 |
| Sud Chemie T4640 | 156 | 0.37 | 94 |
| Sud Chemie T4641 | 166 | 0.43 | 104 |
| Perlkat 25-0 | 734 | 0.44 | 24 |
| CariAct Q6 | 359 | 0.62 | 69 |
| CariAct Q10 | 303 | 1.06 | 139 |
| CariAct Q15 | 208 | 1.02 | 196 |
| Cariact Q30 | 112 | 0.7 | 250 |
| Cariact Q50 | 71 | 0.69 | 387 |
| Davicat Grade 57 | 284 | 1.11 | 156 |

Catalyst Preparations using water as solvent

Silicotungstic acid ($H_4[SiW_{12}O_{40}].24H_2O$, Mw 3310.6) was weighed into a wide-necked plastic bottle and dissolved in distilled water. To this acid solution was added a weighed amount of the support material. The acid solution and support material was left to soak for approximately 1 hr with the occasional gentle swirl during this period to dislodge any trapped air bubbles.

After soaking the unadsorbed acid solution was removed by pouring the acid solution and support material out of the plastic container and into a plastic filter (which contained a filter paper).

The catalyst was allowed to drain until for approximately 15 to 60 minutes until no more liquid was being removed from the catalyst.

After draining was complete the catalyst was transferred to a ceramic tray and dried in a muffle furnace at 130oC under nitrogen

The dried solid catalyst was weighed and the amount of silicotungstic acid adsorbed on the catalyst calculated by difference in weight to the starting material as indicated in the below table.

| Catalyst | Example | Support | Support wt (g) | HPA (g) | Water for HPA solution (g) | Weight catalyst (g) | HPA absorbed (g) | HPA Loading g/kg catalyst |
|---|---|---|---|---|---|---|---|---|
| A | Comparative | Perlkat 25-0 | 30.09 | 15.49 | 47.52 | 34.25 | 4.16 | 121 |
| B | | Perlkat 97-0 | 30.07 | 24.03 | 59.46 | 38.70 | 8.63 | 223 |
| C | Comparative | Perlkat 39-3 | 30.20 | 27.11 | 53.16 | 35.31 | 5.11 | 145 |
| D | | Davicat Grade G57 | 30.06 | 32.36 | 76.70 | 40.70 | 10.64 | 261 |
| E | | Davicat Grade G57 | 30.39 | 64.73 | 65.85 | 52.89 | 22.50 | 425 |
| F | | Aerolyst 3043 | 30.07 | 29.37 | 68.83 | 41.12 | 11.04 | 269 |
| G | | Aerolyst 3045 | 30.24 | 28.34 | 64.04 | 40.96 | 10.72 | 262 |

(continued)

| Catalyst | Example | Support | Support wt (g) | HPA (g) | Water for HPA solution (g) | Weight catalyst (g) | HPA absorbed (g) | HPA Loading g/kg catalyst |
|---|---|---|---|---|---|---|---|---|
| H | | CariAct Q10 | 30.51 | 32.28 | 69.79 | 42.21 | 11.70 | 277 |
| I | | Davicat Grade G57 | 30.17 | 97.08 | 55.52 | 66.76 | 36.59 | 548 |
| J | | CariAct Q30 | 30.08 | 31.77 | 69.45 | 41.50 | 11.42 | 27.5 |
| K | | CariAct Q50 | 30.10 | 33.80 | 71.12 | 41.50 | 11.40 | 275 |
| L | | Davicat Grade G57 | 30.34 | 19.42 | 77.39 | 37.17 | 6.83 | 184 |
| M | | Davicat 1252 | 30.16 | 31.80 | 70.87 | 41.64 | 11.48 | 276 |
| N | | Davicat 1254 | 30.08 | 27.25 | 58.38 | 36.77 | 6.69 | 182 |
| O | Comparative | T4640 | 30.17 | 31.77 | 54.07 | 37.92 | 7.76 | 205 |
| P | Comparative | T4641 | 30.06 | 33.55 | 57.00 | 38.91 | 8.85 | 228 |
| Q | | CariAct Q15 | 15.04 | 15.61 | 34.56 | 21.16 | 6.12 | 289 |
| R | Comparative | CariAct Q6 | 30.42 | 25.58 | 46.14 | 37.48 | 7.06 | 188 |

Catalyst Preparations using ethanol as solvent

The above procedure was followed except that ethanol was used as the solvent. A small amount of n-butanol was also added to the ethanol.

| Catalyst | Example | Support | Support wt (g) | HPA (g) | EtOH & n-BuOH for HPA solution (g) | Weight catalyst g | HPA absorbed (g) | HPA Loading g/kg |
|---|---|---|---|---|---|---|---|---|
| S | | Aerolyst 3043 | 30.59 | 62.87 | 47.969 & 1.499 | 59.63 | 29.04 | 487 |

Catalyst Properties

The dried solid catalysts were analysed by nitrogen porosimetry

| Catalyst | Example | Support | Surface Area of Catalyst (m2/g) | Pore Volume of Catalyst (cm3/g Cat) | Mean PSD of Catalyst (A) | HPA (g) / Surface Area of Catalyst (m2) | HPA (umoles) / Surface Area of Catalyst (m2) |
|---|---|---|---|---|---|---|---|
| A | Comparative | Perlkat 25-0 | 509 | 0.33 | 26 | 0.00024 | 0.07 |
| B | | Perlkat 97-0 | 246 | 0.58 | 95 | 0.00091 | 0.27 |
| C | Comparative | Perlkat 39-3 | 518 | 0.49 | 38 | 0.00028 | 0.08 |
| D | | Davicat Grade 57 | 207 | 0.74 | 142 | 0.00126 | 0.38 |
| E | | Davicat Grade 57 | 144 | 0.52 | 144 | 0.00295 | 0.89 |
| F | | Aerolyst 3043 | 128 | 0.68 | 212 | 0.00210 | 0.63 |
| G | | Aerolyst 3045 | 120 | 0.63 | 211 | 0.00218 | 0.66 |
| H | | CariAct Q10 | 242 | 0.69 | 114 | 0.00114 | 0.35 |
| I | | Davicat Grade 57 | 123 | 0.38 | 125 | 0.00446 | 1.35 |
| J | | CariAct Q30 | 91 | 0.67 | 292 | 0.00302 | 0.91 |
| K | | CariAct Q50 | 62 | 0.37 | 241 | 0.00444 | 1.34 |
| L | | Davicat Grade 57 | 209 | 0.83 | 159 | 0.00088 | 0.27 |
| M | | Davicat 1252 | 227 | 0.59 | 104 | 0.00122 | 0.37 |
| N | | Davicat 1254 | 374 | 0.59 | 64 | 0.00049 | 0.15 |
| O | Comparative | T4640 | 90 | 0.27 | 119 | 0.00228 | 0.69 |
| P | Comparative | T4641 | 118 | 0.3 | 103 | 0.00193 | 0.58 |
| Q | | CariAct Q15 | 148 | 0.66 | 179 | 0.00195 | 0.59 |
| R | Comparative | CariAct Q6 | 298 | 0.42 | 57 | 0.00063 | 0.19 |
| S | | Aerolyst 3043 | 123 | 0.4 | 129 | 0.00396 | 1.20 |

When calculating the micromoles of heteropolyacid (HPA) adsorbed on the catalyst it is assumed that the hetropolyacid is fully hydrated. A Mw of 3310.6 was used for calculating the micro moles of 12-silicotungstic acid ($H_4$ [$SiW_{12}O_{40}$].$24H_2O$) adsorbed

8

Catalyst Testing

Catalysts (0.8 to 0.92ml, 125 to 180um particle size) were loaded into parallel flow reactors. Weights and volumes of the catalysts were recorded.

| Catalyst | Example | Support | Weight (g) | Volume (ml) |
|---|---|---|---|---|
| A | Comparative | Perlkat 25-0 | 0.6527 | 0.804 |
| B | | Perlkat 97-0 | 0.5365 | 0.859 |
| C | Comparative | Perlkat 39-3 | 0.5001 | 0.901 |
| D | | Davicat G57 | 0.6531 | 0.845 |
| E | | Davicat G57 | 0.6438 | 0.707 |
| F | | Aerolyst 3043 | 0.5365 | 0.914 |
| G | | Aerolyst 3045 | 0.5365 | 0.914 |
| H | | CariAct Q10 | 0.5250 | 0.852 |
| I | | Davicat G57 | 0.7848 | 0.776 |
| J | | CariAct Q30 | 0.5120 | 0.887 |
| K | | CariAct Q50 | 0.5252 | 0.817 |
| L | | Davicat G57 | 0.4532 | 0.831 |
| M | | Davicat 1252 | 0.5439 | 0.776 |
| N | | Davicat 1254 | 0.5713 | 0.790 |
| O | Comparative | T4640 | 0.6886 | 0.804 |
| P | Comparative | T4641 | 0.6430 | 0.776 |
| Q | | CariAct Q15 | 0.5810 | 0.859 |
| R | Comparative | CariAct Q6 | 0.7160 | 0.845 |
| S | | Aerolyst 3043 | 0.7623 | 0.804 |

The reactors were pressure tested and then heated to 220°C under a nitrogen flow. When the temperature had reached 220 °C the liquid feed of ethanol, diethyl ether and water were vapourised and mixed with nitrogen prior to being admitted to the reactor containing the catalyst. The reaction conditions were 20 bar, 3000h-1 GHSV, EtOH (28%v/v), Diethyl ether (34.5%v/v), water (3.3%v/v) and nitrogen (34.2%v/v).

The catalysts were tested under the sequence of temperatures; 220 °C for 24 hrs (Phasel), 210 °C for 24hrs (Phase 2), 230°C for 24hrs (Phase 3), 240 °C for 24 hrs (Phase 4) before finally being tested at 220oC for 24 hrs again (Phase 5).

| Catalyst | Example | Support | Reactor Temperature (oC) | reactor-pressure (bar) | GHSV (h-1) | Phase |
|---|---|---|---|---|---|---|
| A | Comparative | Perlkat 25-0 | 220 | 20.00 | 3697 | Phase 5 |
| B | | Perlkat 97-0 | 220 | 19.97 | 3460 | Phase 5 |
| C | Comparative | Perlkat 39-3 | 220 | 19.97 | 3298 | Phase 5 |
| D | | Davicat Grade 57 | 220 | 19.98 | 3517 | Phase 5 |
| E | | Davicat Grade 57 | 220 | 20.01 | 4203 | Phase 5 |
| F | | Aerolyst 3043 | 220 | 20.02 | 3252 | Phase 1 |
| G | | Aerolyst 3045 | 220 | 19.97 | 3251 | Phase 5 |
| H | | CariAct Q10 | 220 | 20.20 | 3488 | Phase 5 |

(continued)

| Catalyst | Example | Support | Reactor Temperature (oC) | reactor-pressure (bar) | GHSV (h-1) | Phase |
|---|---|---|---|---|---|---|
| I | | Davicat Grade 57 | 220 | 20.01 | 3830 | Phase 5 |
| J | | CariAct Q30 | 220 | 19.98 | 3350 | Phase 5 |
| K | | CariAct Q50 | 220 | 20.02 | 3638 | Phase 1 |
| L | | Davicat Grade 57 | 220 | 19.98 | 3577 | Phase 5 |
| M | | Davicat 1252 | 220 | 20.01 | 3830 | Phase 5 |
| N | | Davicat 1254 | 220 | 20.01 | 3762 | Phase 5 |
| O | Comparative | T4640 | 220 | 20.01 | 3696 | Phase 5 |
| P | Comparative | T4641 | 220 | 20.00 | 3829 | Phase 5 |
| Q | | CariAct Q15 | 220 | 20.20 | 3460 | Phase 5 |
| R | Comparative | CariAct Q6 | 220 | 20.20 | 3518 | Phase 5 |
| S | | Aerolyst 3043 | 220 | 20.01 | 3697 | Phase 5 |

The flow rate of the exit gas from the reactors was measured and the exit gas was also analysed by a GC using flame ionisation detectors. Ethylene, ethane, ethanol, diethyl ether, butanes, butanes and acetaldehyde were detected by GC. Product rates were calculated from the gas flow and analysed composition.

The catalysts exhibited the following average catalyst performance, over the phase period defined above, as regards ethylene productivity and ethane selectivity (as defined by ethane / ethylene ratio).

| Catalyst | Example | Support | Pore Volume of Catalyst (cm3/g Cat) | HPA (umoles) / Surface Area of Catalyst (m2) | Ethene (g/kg cat/h) | Ethane in Ethene (ppm) | C4s in Ethene (ppm) | AcH in Ethene (ppm) |
|---|---|---|---|---|---|---|---|---|
| A | Comparative | Perlkat 25-0 | 0.33 | 0.07 | 295 | 2249 | 1125 | 441 |
| B | | Perlkat 97-0 | 0.58 | 0.27 | 1222 | 844 | 897 | 133 |
| C | Comparative | Perlkat 39-3 | 0.49 | 0.08 | 59 | 2781 | N/D | 1259 |
| D | | Grace Davison G57 | 0.74 | 0.38 | 1676 | 267 | 246 | 66 |
| E | | Grace Davison G57 | 0.52 | 0.89 | 2095 | 255 | 400 | 50 |
| F | | Aerolyst 3043 | 0.68 | 0.63 | 1782 | 406 | 494 | 65 |
| G | | Aerolyst 3045 | 0.63 | 0.66 | 1966 | 278 | 343 | 59 |
| H | | CariAct Q10 | 0.69 | 0.35 | 1622 | 351 | 569 | 70 |

(continued)

| Catalyst | Example | Support | Pore Volume of Catalyst (cm3/g Cat) | HPA (umoles) / Surface Area of Catalyst (m2) | Ethene (g/kg cat/h) | Ethane in Ethene (ppm) | C4s in Ethene (ppm) | AcH in Ethene (ppm) |
|---|---|---|---|---|---|---|---|---|
| I | | Grace Davison G57 | 0.38 | 1.35 | 1636 | 297 | 385 | 58 |
| J | | CariAct Q30 | 0.67 | 0.91 | 1502 | 382 | 203 | 78 |
| K | | CariAct Q50 | 0.37 | 1.34 | 1234 | 836 | 359 | 118 |
| L | | Grace Davison G57 | 0.83 | 0.27 | 1343 | 400 | 411 | 99 |
| M | | Grace Davison 1252 | 0.59 | 0.37 | 1945 | 224 | 284 | 58 |
| N | | Grace Davison 1254 | 0.59 | 0.15 | 1398 | 400 | 517 | 83 |
| O | Comparative | T4640 | 0.27 | 0.69 | 461 | 2452 | 794 | 352 |
| P | Comparative | T4641 | 0.3 | 0.58 | 743 | 1175 | 865 | 183 |
| Q | | CariAct Q15 | 0.66 | 0.59 | 1706 | 269 | 303 | 66 |
| R | Comparative | CariAct Q6 | 0.42 | 0.19 | 878 | 1142 | 2011 | 166 |
| S | | Aerolyst 3043 | 0.4 | 1.20 | 1897 | 443 | 727 | 85 |

The mass balance was consistently above 95%, the detected by-products are given as ratios to the ethene, the analytical system employed was capable of detecting C1 - C6 hydrocarbons and oxygenates. As illustrated above the catalysts according to the present invention are highly selective.

**Claims**

1. Supported heteropolyacid catalyst **characterised in that** the pore volume of the supported heteropolyacid catalyst suffices the following formula:

$$PV > 0.6 - 0.3 \, [HPA \ loading \ / \ Surface \ Area \ of \ Catalyst]$$

2. Catalyst according to claim 1 **characterised in that** the heteropolyacid loading, per surface area of the supported heteropolyacid catalyst is more than 0.1 (micro moles/m2).

3. A process according to any of the preceding claims wherein the supported heteropolyacid catalyst has a catalytic loading of between 150 to 600g heteropolyacid /kg catalyst.

4.  A process according to any of the preceding claims, wherein the pore volume of the catalyst support of the supported heteropolyacid catalyst is preferably more than 0.50ml/g and preferably more than 0.8 ml/g.

5.  A process according to any of the preceding claims, wherein the catalyst support of the supported heteropolyacid catalyst has an average pore radius of between 10 to 500Å, preferably between 30 to 175Å, more preferably between 50 to 150 Å and most preferably between 60 to 120Å.

6.  A process according to any of the preceding claims, wherein the catalyst support of the supported heteropolyacid catalyst has a BET surface area between 50 and 600 m2/g and preferably between 150 and 400 m2/g.

7.  A process according to any of the preceding claims, wherein the catalyst support of the supported heteropolyacid catalyst has an average single particle crush strength of at least 1 kg force, preferably at least 2 kg force, more preferably at least 6 kg force and most preferably at least 7 kg force.

8.  A process according to any of the preceding claims, wherein the catalyst support of the supported heteropolyacid catalyst has a bulk density of at least 380 g/l and preferably at least 395 g/l.

9.  A process according to any of the preceding claims, wherein the catalyst support of the supported heteropolyacid catalyst is a silica support.

**European Patent Office**

## EUROPEAN SEARCH REPORT

Application Number

EP 06 25 5968

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | WO 2007/003901 A (BP CHEM INT LTD [GB]; GRACEY BENJAMIN PATRICK [GB]; BOLTON LESLIE WILL) 11 January 2007 (2007-01-11) PAGE 9, LINE 31-PAGE 10, LINE 16 PAGE 11, LINE 1-PAGE 11, LINE 19 ----- | 1-9 | INV. B01J21/00 B01J23/16 B01J23/20 B01J23/22 B01J23/30 B01J27/14 B01J27/188 B01J27/24 B01J37/06 B01J37/08 B01J37/16 C07C1/00 C07C1/02 C07C1/24 C07C11/02 C07C11/04 C07C11/06 |
| A | EP 0 941 762 A (BP CHEM INT LTD [GB]) 15 September 1999 (1999-09-15) PARAGRAPHS [0031]-[0033] ----- | 1-9 | |
| Y | US 5 227 141 A (KIM JAE J [KR] ET AL) 13 July 1993 (1993-07-13) EXAMPLES 1-3; TABLES 1-4 ----- | 1-9 | |
| Y | TSIGDINOS G A: "PREPARATION AND CHARACTERIZATION OF 12-MOLYBDOPHOSPHORIC AND 12-MOLYBDOSILICIC ACIDS AND THEIR METAL SALTS" INDUSTRIAL AND ENGINEERING CHEMISTRY, PRODUCT RESEARCH AND DEVELOPMENT, AMERICAN CHEMICAL SOCIETY. WASHINGTON, US, vol. 13, no. 4, 1974, pages 267-274, XP001194032 ISSN: 0536-1079 PAGE 271, RIGHT COLUMN, LINES 5-10 UNDERNEATH THE FIGURE 3 ----- | 1-9 | |

| | | |
|---|---|---|
| | | TECHNICAL FIELDS SEARCHED (IPC) |
| | | B01J C07C |

The present search report has been drawn up for all claims

| Place of search | Date of completion of the search | Examiner |
|---|---|---|
| Munich | 18 July 2007 | Rumbo, Angel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 06 25 5968

This annex lists the patent family members relating to the patent documents cited in the above-mentioned European search report.
The members are as contained in the European Patent Office EDP file on
The European Patent Office is in no way liable for these particulars which are merely given for the purpose of information.

18-07-2007

| Patent document cited in search report | | Publication date | Patent family member(s) | | Publication date |
|---|---|---|---|---|---|
| WO 2007003901 | A | 11-01-2007 | NONE | | |
| EP 0941762 | A | 15-09-1999 | CA | 2265056 A1 | 10-09-1999 |
| | | | CN | 1233532 A | 03-11-1999 |
| | | | CZ | 9900784 A3 | 17-11-1999 |
| | | | JP | 11314040 A | 16-11-1999 |
| | | | MX | PA99002335 A | 24-02-2005 |
| | | | US | 6040262 A | 21-03-2000 |
| | | | ZA | 9901845 A | 11-10-2000 |
| US 5227141 | A | 13-07-1993 | JP | 1956514 C | 10-08-1995 |
| | | | JP | 5192579 A | 03-08-1993 |
| | | | JP | 6083788 B | 26-10-1994 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006052240 A
- US 6624325 B
- US 5227141 A
- US 2004024918 A
- US 3928483 A
- US 4025575 A
- US 4252479 A, Chang
- US 4496786 A, Santilli
- US 4547616 A, Avidan

- US 4677243 A, Kaiser
- US 4843183 A, Inui
- US 4499314 A, Seddon
- US 4447669 A, Harmon
- US 5095163 A, Barger
- US 5191141 A, Barger
- US 5126308 A, Barger
- US 4973792 A, Lewis
- US 4861938 A, Lewis

**Non-patent literature cited in the description**

- **BRUNAUER, S ; EMMETT, P H ; TELLER, E.** *J. Amer. Chem. Soc.,* 1938, vol. 60, 309

- **BARRETT, E P ; JOYNER, LG ; HALENDA P P.** *J. Am Chem. Soc.,* 1951, vol. 73, 373-380